# EUROPÄISCHE PATENTSCHRIFT

(11) **EP 1 918 049 B1**
(45) Veröffentlichungstag und Bekanntmachung des Hinweises auf die Patenterteilung: **17.10.2012**
(21) Anmeldenummer: 07021253.5
(22) Anmeldetag: 30.10.2007
(51) Int. Cl.: B23B 29/02, B23B 41/04, B23B 41/12

(54) **Verfahren zum Ausspindeln von Werkstücken mit einer Maschine**
Method for boring workpieces with a machine
Procédé d'alésage de pièces à usiner avec une machine

(30) Priorität: 30.10.2006 DE 102006052038
(43) Veröffentlichungstag der Anmeldung: 07.05.2008
(73) Patentinhaber: Wieland Anlagentechnik GmbH, 89079 Ulm (DE)
(72) Erfinder: Wiedmann, Andreas, 89079 Ulm (DE)

(56) Entgegenhaltungen:
- DE-A1- 3 822 615
- DE-A1- 4 019 704

## Beschreibung

Die Erfindung betrifft ein Verfahren zum Ausspindeln von Werkstücken mit einer Maschine, umfassend zwei steuerbare Spindeleinheiten mit einer Werkzeugaufnahme für einen Werkzeugträger in auslenkbaren Stellköpfen, in denen der Werkzeugträger radial und axial eingespannt ist, und wobei das Werkzeug tangential zur Rotationsbewegung zum Herstellen von Bohrungen mit radial und/oder axial einstellbaren Mantellinienverläufen an ein Werkstück angreift.

Es ist oftmals notwendig ein Werkstück nicht nur mit runden, sondern auch mit ovalen und/oder formkombinierten Durchmesser zu versehen. So ist es beispielsweise erforderlich, dass die Bolzenbohrung eines Kolbens einer Brennkraftmaschine, um mechanischen und thermischen Verformungen entgegenzuwirken, unrund ausgebildet ist.

Zu diesem Zweck sind nach dem Stand der Technik mehrere Maschinen, die nach unterschiedlichen Prinzipien arbeiten, bekannt.

Gemäß der DE 38 22 615 C2, die als nächstkommender Stand der Technik anzusehen ist, ist eine Maschine zum Ausspindeln von Werkstücken mit einer rotierenden Bohrstange und mit zwei gegenüberliegenden, unabhängig voneinander steuerbaren Spindeleinheiten bekannt. Mindestens eine der Spindeleinheiten ist als eine quer zur Drehachse einstellbare Werkzeughalter-Stell- Einrichtung zur Einspannung der Bohrstange ausgebildet, für die ein über ein Druckmittel feinsteinstellbarer Bohrkopf vorgesehen ist.
Das andere Ende der Bohrstange kann entweder in einer zweiten Spindeleinheit oder aber in einem Drehschwenklager untergebracht sein.
Bei der Vorsehung von zwei Bohrköpfen wird die Bohrstange an ihren beidseitigen Enden synchron und hinsichtlich ihrer Vorschubeinrichtung phasengleich geführt. Der druckverstellbare Bohrkopf entsprechend dieser Schrift bewirkt, dass mit der Druckveränderung sich der Werkzeugträger parallel zu sich selbst entsprechend dem Maß der Veränderung verschiebt.

Wenn an Stelle des zweiten Bohrkopfes ein achszentrales Lager verwendet wird, so ergibt sich je nach Auslenkung des Bohrkopfes für den Werkzeugträger eine kegelförmige Umlaufbahn für denselben.

Die radiale Auslenkung der Bohrstange gemäß dieser Schrift erfolgt dann mittels Druckveränderung, wofür ein Druckfluid über Druckleitungen dem Bohrkopf zugeführt werden muss.

Eine andere Art der Radialverstellung einer Bohrstange ist aus der DE 38 28 854 A1 bekannt. Bei dieser Feinbohrmaschine erfolgt die Auslenkung eines Drehmeißels mit Hilfe eines piezoelektrischen Stellmotors. Die von dem piezoelektrischen Stellmotor ausgehende Antriebskraft wird mit einer Schubstange auf einen federnd auslenkbaren Werkzeughalter übertragen.
Wenn gemäß dieser Schrift Bohrungen mit unterschiedlichen Durchmessern erzeugt werden sollen, so müssen Bohrstangen mit verschiedenen Durchmessern verwendet werden.
Weiterhin müssen Störfaktoren, wie beispielsweise Temperaturänderungen, die sich auf den Stellmotor für die Schubstange auswirken, durch ein kompliziertes elektronisches Überwachungssystem bereinigt werden.

Entsprechend der DE 37 26 276 C2 ist zur Erzeugung von unrunden Bohrungen eine Einrichtung zum Feinverstellen des Werkzeugs beschrieben, bei der die Wandlung des Steuerluftdrucks in den hydraulischen Stelldruck nicht mehr innerhalb des sich drehenden Radialstellkopfs, sondern zwischen einer Kolbenanordnung und dem Radialstellkopf erfolgt.

Gemäß einer weiteren Schrift, der EP 0793 556 B1, wird eine Feinbohrmaschine zur Erzeugung unrunder Bohrungen beschrieben, bei der unrunde Bohrungen dadurch erzeugt werden, indem das Werkstück und nicht die Bohrstange mit dem Werkzeug zur Erzeugung einer Bohrung mit unrundem Mantelverlauf, periodisch ausgelenkt wird.

Ausgehend von diesem Stand der Technik ist es nun Aufgabe der vorliegenden Erfindung, ein Verfahren zum Ausspindeln von Werkstücken mit einer Maschine zu schaffen, bei den das Ausbohren der Werkstücke mit größerer Genauigkeit und unter Vermeidung von äußeren Störfaktoren, die durch die Bewegung von Massen bzw Verlagerung von Massen und Massenoszillationen auftreten, erfolgt.

Gelöst wird dieser Aufgabe mit den Merkmalen des Patentanspruchs 1.

Vorzugsweise Ausgestaltungen ergeben sich aus den Unteransprüchen.

Mithilfe der Erfindung müssen nicht, wie beim Stand der Technik, die Spindelachsen schräg gestellt werden. Bauteile wie Schubstangen, Hebel oder auch hydraulische Verstelleinrichtungen zum Verstellen der Spindelachse müssen nicht betätigt werden, so dass die infolge der Kraftübertragung auftretenden Bewegungen von Massen und die damit ebenfalls verbundenen zeitlichen Verzögerungen vermieden werden. Insbesondere treten keine durch Oszillation von großen Massen verursachte Schwingungen auf. All diese Faktoren führen beim Stand der Technik zu Ungenauigkeiten bei den Mantellinienverläufen der Bohrungen im Werkstück.

Gemäß der Erfindung wird also weder das Werkstück periodisch bewegt, noch wird die Bohrstange an sich periodisch ausgelenkt, sondern die Erzeugung der Bohrungen erfolgt als ein Resultat einer taumelnden Bewegung der Bohrstange infolge von gegenläufigen Rotationen ihrer beiden Enden.

Die Erfindung soll nachfolgend an Hand der Figuren näher erläutert werden.

Dabei zeigen:
Figur 1: die beiden unabhängig voneinander steuerbaren Spindeleinheiten und die zwischen diesen angeordnete Bohrstange,
Figur 2: eine vereinfachte Darstellung der aus den zwei gegenläufigen Laufbahnen der Rotationsenden der Bohrstange resultierenden elliptischen Laufbahn der Schneide (als Pfeildarstellung),
Figur 3: eine der Figur 2 entsprechende Darstellung, bei der die Rotationsbewegung der Bohrstangenenden um 45° zueinandem versetzt ist,
Figur 4: eine Darstellung der Bohrstange mit Schneide und eingespanntem Werkstück,
Figur 5: eine Darstellung entsprechend der Figur 4 mit zwei gegenüberliegend angeordneten Schneiden,
Figur 6: ebenfalls eine Darstellung entsprechend der Figur 4, bei der zwei Schneiden dicht hintereinander angeordnet sind,

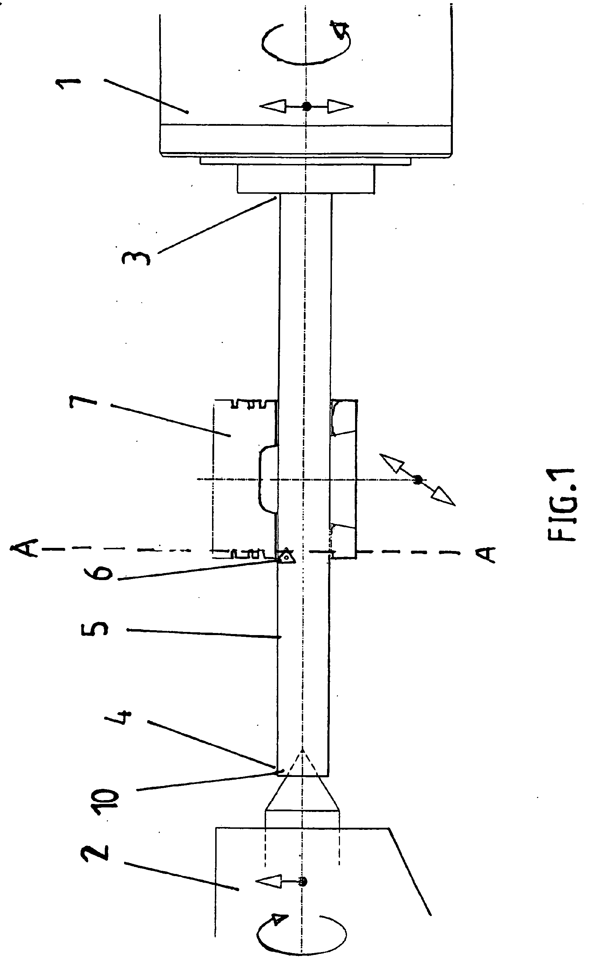

Entsprechend der Figur 1 ist ein Ausführungsbeispiel eines erfindungsgemäßen Verfahrens zum Ausspindeln von Werkstücken mit einer Maschine angegeben. In diesem Beispiel sind zwei gegenüberliegende, unabhängig voneinander steuerbare Spindeleinheiten 1 und 2 dargestellt. In den nicht dargestellten Werkzeugaufnahmen der Spindeleinheiten wird eine Bohrstange 5 in nach dem Stand der Technik bekannten auslenkbaren Stellköpfen radial und axial eingespannt.
Beide Spindeleinheiten sind im Ausführungsbeispiel axial verfahrbar, wobei die Bohrstange 5 in der Werkzeugaufnahme der Spindeleinheit 1 verbleibt. Die Bohrstange 5, beziehungsweise das Werkzeug 6, das im vorliegenden Fall als eine Schneide ausgebildet ist, kann dann, nach dem Auseinanderfahren der Spindeleinheiten, von der Werkzeugaufnahmen der Spindeleinheit 2 getrennt werden. Das Werkstück 7 wird anschließend, im vorliegenden Fall handelt es sich um ein vor dem Ausspindelprozeß mit einer Bohrung versehenes Werkstück, auf der gemeinsamen Rotationsmitte der Spindeleinheiten positioniert und gespannt.
Die Spindeleinheit 1 mit der befestigten Bohrstange 5 fährt dann durch das bereits vorgebohrte Werkstück 7.
Anschließend wird dann die gegenüberliegende Spindeleinheit 2 gegen die Stirnseite der Bohrstange 5 bewegt und diese wird dann beispielsweise in einer Zentrierbohrung fixiert.
Das Ausspindeln des Werkstücks 7 mit der Schneide 6 der Bohrstange 5 in der gemeinsamen Rotationsmitte der Spindeleinheiten 1 und 2 erfolgt entweder durch das Hin- und Herbewegen der Spindeleinheiten oder aber durch die Bewegung des Werkstücks selbst.

Um neben runden dann unrunde oder überlagerte oder auch konisch verlaufende Bohrungen, wie zum Beispiel Trompetenformen in einem Werkstück, auszubilden, kann beispielsweise die Bohrstange 5 auf der Seite der Spindeleinheit 1 durch eine integriert umlaufende Querbewegung radial auf einen anderen Flugkreis verlagert werden.
Ebenso kann an der Spindeleinheit 2 die Zentrierspitze zur die Bohrstange ebenfalls durch eine integrierte umlaufende Querbewegung radial ausgelenkt werden. Das Bohrstangenende 4 beschreibt dann einen zusätzlichen Flugkreis.

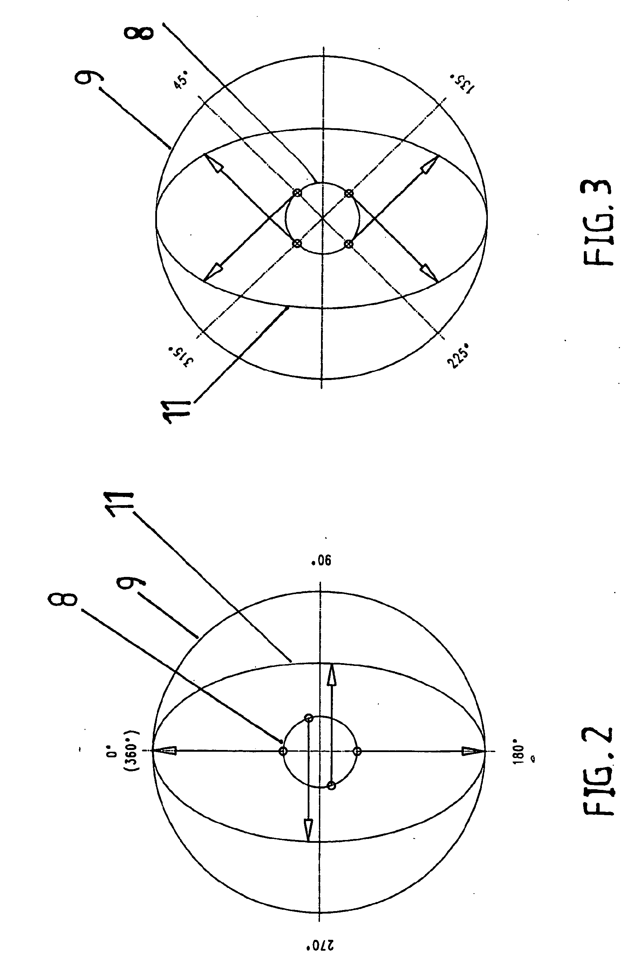

Diese Flugkreise sind in den Figuren 2 und 3 schematisch dargestellt.
An der Spindeleinheit 1 wird im dargestellten Ausführungsbeispiel der in diesen Figuren mit der Bezugsziffer 9 dargestellte Flugkreis beschrieben. Der kleinere, innere Kreis mit der Bezugsziffer 8 stellt den Flugkreis der Bohrstange 5 an dem Ende 4 dar.
Durch die gegenläufige Überlagerung der beiden Flugkeise entsteht eine taumelnde Bewegung, welche die Schneide 6 der Bohrstange entlang der in den Figuren 2 und 3 dargestellten elliptischen Bahn 11 entlang führt.

Die Position der Schneide 6 ist in den Figuren 2 und 3 als ein die elliptische Laufbahn beschreibender Pfeil dargestellt.

Der Bahnenverlauf des Pfeils bzw. der Schneide ist ein Resultat der beiden gegenläufigen Flugkreise.

Das bedeutet, die Durchmesser der Flugkreise und gegenläufigen Bewegungen der Bohrstangeenden in den Spindeleinheiten 1 und 2 sind frei programmierbar, so dass jede rotationssymmetrische Form in Abhängigkeit zu axialen Position des Werkstücks realisiert werden kann.

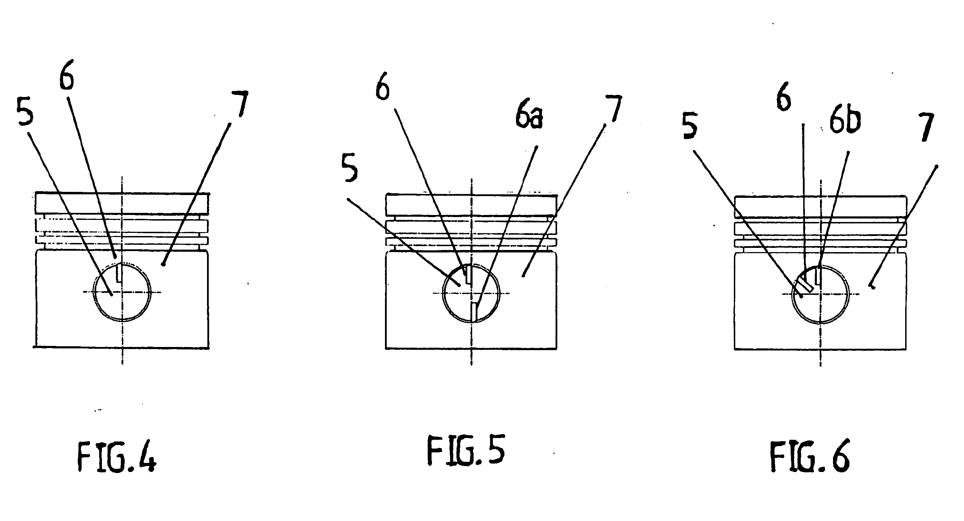

Die Figuren 4 bis 6 sind Schnittdarstellungen entlang der Linie A-A von Figur 1. Entsprechend der Figur 4 ist die Bohrstange 5 nur mit einer einzigen Schneide 6 versehen.
Sollen vor- und rückwärtige Bearbeitung oder verzerrte Konturen ausgebildet werden, so können hierfür entsprechende Schneiden 6 an den entsprechenden Stellen der Bohrstange vorgesehen werden.

## Patentansprüche

1. Verfahren zum Ausspindeln von Werkstücken (7) mit einer Maschine, umfassend zwei steuerbare Spindeleinheiten (1, 2) mit einer Werkzeugaufnahme für einen Werkzeugträger (5) in auslenkbaren Stellköpfen, in denen der Werkzeugträger (5) radial und axial eingespannt wird, wobei das Werkzeug (6) tangential zur Rotationsbewegung zum Herstellen von Bohrungen mit radial und/oder axial einstellbaren Mantellinienverläufen an ein Werkstück (7) angreift, und
wobei die Spindeleinheiten (1, 2) unabhängig voneinander zur Erzielung der Mantellinienverläufe steuerbar sind,
**dadurch gekennzeichnet, dass**
die Spindeleinheiten (1, 2) die Enden (3, 4) des Werkzeugträgers (5) durch gegenläufige Rotationen auf gegenläufigen Laufbahnen zur Erzeugung einer Taumelbewegung des an dem Werkzeugträger (5) angeordneten Werkzeugs (6) zur Bearbeitung des Werkstücks (7) führen.

2. Verfahren zum Ausspindeln von Werkstücken nach Anspruch 1, **dadurch gekennzeichnet, dass** die Laufbahnen der Enden (3, 4) des Werkzeugträgers auf Kreisbahnen (8, 9) von unterschiedlichen Durchmessern liegen, so dass das Werkzeug (6) am Werkzeugträger (5) einem elliptischen Mantellinienverlauf folgt.

3. Verfahren zum Ausspindeln von Werkstücken nach Anspruch 1 oder 2, **dadurch gekennzeichnet, dass** die gegenläufigen Laufbahnen der Spindeln (1, 2) in einem bestimmten Verhältnis zueinander synchronisiert werden.

4. Verfahren zum Ausspindeln von Werkstücken nach einem der vorhergehenden Ansprüche 1 bis 3, **dadurch gekennzeichnet, dass** die Spindeleinheiten (1, 2) gegenläufig mit derselben Prozessdrehzahl synchronisiert werden.

5. Verfahren zum Ausspindeln von Werkstücken nach einem der Ansprüche 1 bis 4, **dadurch gekennzeichnet, dass** nur ein Ende (3) des Werkzeugträgers (5) radial und axial an der Werkzeugaufnahme der Spindeleinheit (1) eingespannt ist, während das gegenüberliegende Ende (4) lediglich in einer Zentrierbohrung (10) der Werkzeugaufnahme der Spindeleinheit (2) gelagert wird.

6. Verfahren zum Ausspindeln von Werkstücken nach einem der vorhergehenden Ansprüche 1 bis 5, **dadurch gekennzeichnet, dass** das Werkzeug (6) als Schneide ausgebildet wird.

7. Verfahren zum Ausspindeln von Werkstücken nach einem der vorhergehenden Ansprüche 1 bis 6, **dadurch gekennzeichnet, dass** die Spindeleinheiten (1, 2) der Maschine zur Bearbeitung des Werkstücks (7) axial verschiebbar angeordnet werden.

8. Verfahren zum Ausspindeln von Werkstücken nach einem der vorhergehenden Ansprüche 1 bis 6, **dadurch gekennzeichnet, dass** das Werkstück (7) zur Bearbeitung axial verschiebbar angeordnet wird.

9. Verfahren zum Ausspindeln von Werkstücken nach einem der vorhergehenden Ansprüche 1 bis 8, **dadurch gekennzeichnet, dass** auf dem Werkzeugträger (5) zur Bearbeitung des Werkstücks (7) mehrere Werkzeuge (6) in entsprechenden Positionen angeordnet werden.

## Claims

1. A method for finish-boring workpieces (7) using a machine comprising two controllable spindle units (1, 2) having a tool seat for a tool carrier (5) in deflectable adjusting heads, in which the tool carrier (5) is radially and axially clamped, wherein the tool (6) acts on a workpiece (7) tangentially to the rotary movement to produce bores with radially and/or axially adjustable surface line courses, and wherein the spindle units (1, 2) are controllable independently of each other to achieve the surface line courses,
**characterised in that**
the spindle units (1, 2) guide the ends (3, 4) of the tool carrier (5) by rotations in opposite directions on paths in opposite directions to produce a gyrating motion of the tool (6) arranged on the tool carrier (5) for processing the workpiece (7).

2. A method for finish-boring workpieces according to claim 1, **characterised in that** the paths of the ends (3, 4) of the tool carrier lie on circular paths (8, 9) of different diameters, so that the tool (6) on the tool carrier (5) follows an elliptical surface line course.

3. A method for finish-boring workpieces according to claim 1 or 2, **characterised in that** the paths in opposite directions of the spindles (1, 2) are synchronised in a specific relationship with respect to each other.

4. A method for finish-boring workpieces according to any one of the preceding claims 1 to 3, **characterised in that** the spindle units (1, 2) are synchronised in opposite directions at the same process speed.

5. A method for finish-boring workpieces according to any one of the preceding claims 1 to 4, **characterised in that** only one end (3) of the tool carrier (5) is clamped radially and axially at the tool holder of the spindle unit (1), whilst the opposite end (4) is merely mounted in a centring bore (10) of the tool holder of the spindle unit (2).

6. A method for finish-boring workpieces according to any one of the preceding claims 1 to 5, **characterised in that** the tool (6) is in the form of a blade.

7. A method for finish-boring workpieces according to any one of the preceding claims 1 to 6, **characterised in that** the spindle units (1, 2) of the machine are arranged so as to be axially displaceable for processing the workpiece (7).

8. A method for finish-boring workpieces according to any one of the preceding claims 1 to 6, **characterised in that** the workpiece (7) is arranged so as to be axially displaceable for the processing.

9. A method for finish-boring workpieces according to any one of the preceding claims 1 to 8, **characterised in that** a plurality of tools (6) are arranged in suitable positions on the tool carrier (5) for processing the workpiece (7).

## Revendications

1. Procédé pour aléser des pièces d'oeuvre (7) à l'aide d'une machine englobant deux unités de broche (1, 2) pouvant être commandées, qui comportent un emplacement de réception d'outil pour un porte-outil (5) dans des têtes de réglage pouvant être déviées, dans lesquelles le porte-outil (5) peut être serré radialement et axialement, l'outil (6) agissant sur une pièce d'oeuvre (7), tangentiellement au mouvement de rotation, pour la réalisation d'alésages présentant des tracés de génératrice réglables radialement et/ou axialement, et les unités de broche (1, 2) pouvant être commandées indépendamment l'une de l'autre pour l'obtention des tracés de génératrice,
**caractérisé en ce que** les unités de broche (1, 2) guident les extrémités (3, 4) du porte-outil (5) par des rotations opposées sur des voies de déplacement opposées, pour engendrer un mouvement de nutation de l'outil (6) agencé sur le porte-outil (5), en vue de l'usinage de la pièce d'oeuvre (7).

2. Procédé pour aléser des pièces d'oeuvre selon la revendication 1, **caractérisé en ce que** les voies de déplacement des extrémités (3, 4) du porte-outil se situent sur des voies circulaires (8, 9) de diamètres différents, de sorte que l'outil (6) sur le porte-outil (5) suit un tracé de génératrice elliptique.

3. Procédé pour aléser des pièces d'oeuvre selon la revendication 1 ou la revendication 2, **caractérisé en ce que** les voies de déplacement opposées des broches (1, 2) sont synchronisées l'une par rapport à l'autre dans un rapport déterminé.

4. Procédé pour aléser des pièces d'oeuvre selon l'une des revendications précédentes 1 à 3, **caractérisé en ce que** les unités de broche (1, 2) sont synchronisées en opposition avec la même vitesse de rotation de processus.

5. Procédé pour aléser des pièces d'oeuvre selon l'une des revendications 1 à 4, **caractérisé en ce que** seule une extrémité (3) du porte-outil (5) est serrée radialement et axialement dans l'emplacement de réception d'outil de l'unité de broche (1), tandis que l'extrémité opposée (4) est uniquement montée dans un alésage de centrage (10) de l'emplacement de réception d'outil de l'unité de broche (2).

6. Procédé pour aléser des pièces d'oeuvre selon l'une des revendications précédentes 1 à 5, **caractérisé en ce que** l'outil (6) est réalisé sous forme de plaquette de coupe.

7. Procédé pour aléser des pièces d'oeuvre selon l'une des revendications précédentes 1 à 6, **caractérisé en ce que** les unités de broche (1, 2) de la machine pour l'usinage de la pièce d'oeuvre (7) sont agencées de manière à pouvoir coulisser axialement.

8. Procédé pour aléser des pièces d'oeuvre selon l'une des revendications précédentes 1 à 6, **caractérisé en ce que** la pièce d'oeuvre (7) est agencée de manière à pouvoir coulisser axialement pour l'usinage.

9. Procédé pour aléser des pièces d'oeuvre selon l'une des revendications précédentes 1 à 8, **caractérisé en ce que** plusieurs outils (6) sont agencés sur le porte-outil (5) dans des positions appropriées pour l'usinage de la pièce d'oeuvre (7).
